# EUROPÄISCHE PATENTSCHRIFT

(11) **EP 3 997 685 B1**
(45) Veröffentlichungstag und Bekanntmachung des Hinweises auf die Patenterteilung: **05.06.2024**
(21) Anmeldenummer: 20737431.5
(22) Anmeldetag: 07.07.2020
(51) Int. Cl.: G08G 1/01

(54) **ERHEBEN VON FAHRZEUGBASIERTEN, ORTSBEZOGENEN DATENSÄTZEN**
COLLECTION OF VEHICLE-BASED, LOCATION-SPECIFIC DATA SETS
RELÈVE DE JEUX DE DONNÉES LIÉS À UN LIEU ET BASÉS SUR UN VÉHICULE

(30) Priorität: 08.07.2019 DE 102019118387
(43) Veröffentlichungstag der Anmeldung: 18.05.2022
(73) Patentinhaber: VOLKSWAGEN AKTIENGESELLSCHAFT, 38440 Wolfsburg (DE); Audi AG, 85045 Ingolstadt (DE)
(72) Erfinder: MAX, Stephan, 38518 Gifhorn (DE); FANGWA NZEYA, Edson William, 85051 Ingolstadt (DE)
(74) Vertreter: Rittner, Karsten
(86) Internationale Anmeldenummer: PCT/EP2020/069051
(87) Internationale Veröffentlichungsnummer: WO 2021/005025

(56) Entgegenhaltungen:
- DE-A1-102011 106 295
- DE-A1-102016 110 794
- DE-A1-102017 206 363
- DE-A1-102017 207 014
- US-A1- 2015 088 335

## Beschreibung

Die Erfindung betrifft ein Verfahren zum Erheben von fahrzeugbasierten Daten, insbesondere Umfelddaten, und deren Übermittlung an einen Backend-Rechner, wobei die betreffenden Datensätze vorgegebene Streckenabschnitte betreffen, die von einem Schwarm von datensammelnden Fahrzeugen befahren werden, sowie eine entsprechende Vorrichtung.

In den vergangenen Jahren sind vielfältige interaktive elektrische Seriensysteme zur Unterstützung des Fahrers entwickelt worden. Die integrierten Assistenz- und Komfortsysteme erfassen mit diversen Sensoren das Umfeld des Fahrzeugs, um die Fahrt sicherer und komfortabler zu gestalten, und erzeugen auf diese Weise aktuelle Daten über das gerade befahrene Umfeld, also den aktuell befahrenen Streckenabschnitt.

Da die Fahrzeuge bereits mit diversen Sensorsystemen ausgestattet sind, ist es sinnvoll diese Daten zu sammeln und übergreifend zu nutzen. Verstärkt wird dieser Trend durch zwei veränderte Rahmenbedingungen. Zum einen sind bisher optional angebotene Systeme durch die stetig steigenden Sicherheitsanforderungen von beispielsweise NCAP (NCAP: New Car Assessment Programme bzw. Europäisches Neuwagen-Bewertungs-Programm) zur Serienausstattung geworden. Zum anderen ist durch den Zwang zum elektronischen Notrufsystem, auch eCall genannt, eine Mobilfunkanbindung im Fahrzeug gesetzlich vorgeschrieben. Daher können die Umfelddaten direkt ortsbezogen und zeitsynchronisiert erhoben und kommuniziert werden.

Im Fahrzeug selbst werden unterschiedliche Datenklassen erfasst. Hinsichtlich des Umfeld des Fahrzeugs werden die Daten, die als fahrzeugbasierte Daten bezeichnet werden, wie folgt unterteilt:
- Geoinformationen, welche die geographische Phänomene betreffen, die direkt und indirekt mit einer auf die Erde bezogene Position verbunden sind,
- Verkehrsdaten, also eine Beschreibung der Zustände aller am Verkehr beteiligten Objekte,
- Ortsbezogene Ereignisdaten, wie beispielsweise punktuell auftretende lokale Gefahrenstellen, und
- Ortsbezogene Zustandsdaten, nämlich kontinuierlich erfassbare Daten wie beispielsweise Temperatur, Parkplatzbelegung, Ampelzustand, Wechselverkehrszeichen, etc.

In bisherigen Systemen werden die Daten einfach aus dem Fahrzeug direkt weitergeleitet. Hierbei wurden Datenpakete im Fahrzeug erfasst und unverändert an einen Backend-Rechner gesendet. Ein intelligentes Handling der Daten wurde im Fahrzeug nicht vorgenommen.

Die Druckschrift DE 10 2013 215 499 A1 betrifft den Betrieb eines Navigationssystems in einem Fahrzeug. Dabei werden Navigationsdaten des Navigationssystems zu mindestens einer von mehreren Steuerungsvorrichtungen des Fahrzeugs übertragen, erfolgt die Datenübertragung über mindestens einen Datenbus, an den die Steuerungsvorrichtungen angeschlossen sind, werden die Navigationsdaten priorisiert und wird die Übertragung der Navigationsdaten über den Datenbus anhand der Priorisierung gesteuert.

Die Druckschrift DE 10 2017 119 451 A1 betrifft ein Verfahren zum Konnektivitätsmanagement einer Telematikeinheit. Das Verfahren umfasst:
- Einstellung einer Telematikeinheit über eine Steuerung in einem ersten Konnektivitätsmodus;
- Aufbauen einer Kommunikation mit einem Drahtlosträgersystem über eine Antenne in dem ersten Konnektivitätsmodus;
- Bestimmen über die Steuerung, dass bei dem Fahrzeug ein Konnektivitätsartereignis aufgetreten ist;
- Schalten der Telematikeinheit über die Steuerung aus dem ersten Konnektivitätsmodus in einen zweiten Konnektivitätsmodus; und
- Aufbauen einer Kommunikation mit dem Drahtlosträgersystem über die Antenne in dem zweiten Konnektivitätsmodus.

Die Druckschrift DE 10 2013 225 497 A1 betrifft ein Verfahren zum Unterstützen einer Datenkommunikation zwischen einer Recheneinrichtung eines Fahrzeugs und einem Dienstserver mithilfe eines Unterstützungssystems durch: Empfangen einer Georeferenz durch das Unterstützungssystem von dem Dienstserver und Ermitteln einer der empfangenen Georeferenz zugeordneten, kartenspezifischen Kartenreferenz in einer digitalen Karte des Unterstützungssystems durch das Unterstützungssystem unter Verwendung eines der empfangenen Georeferenz zugeordneten Georeferenzierungsverfahrens; Erzeugen eines eindeutigen Codes zu der ermittelten Kartenreferenz durch das Unterstützungssystem und Speichern des Codes zugeordnet zu der ermittelten Kartenreferenz und/ oder der empfangenen Georeferenz in einem Speicher des Unterstützungssystems; Empfangen des Codes durch die Recheneinrichtung des Fahrzeugs; Übertragen einer Anforderungsnachricht mit dem Code von der Recheneinrichtung des Fahrzeugs an das Unterstützungssystem, wobei durch die Anforderungsnachricht das Unterstützungssystem dazu aufgefordert wird, eine dem Code zugeordnete und nach einem durch die Anforderungsnachricht definierten Georeferenzierungsverfahren erzeugte Georeferenz und/oder eine dem Code zugeordnete und für ein durch die Anforderungsnachricht definiertes Format einer digitalen Karte geeignete Kartenreferenz an die Recheneinrichtung des Fahrzeugs zu übermitteln. Das Dokument US2015088335 offenbart einen "event recorder" in einem Fahrzeug der Daten zu einem Server überträgt, wobei eine durch den Server ausgewählte Teilmenge der Daten übertragen wird.

Das Dokument DE102016110794 offenbart ein Informationssammelsystem, bei dem die Daten nach Anforderung des Servers hochgeladen werden.

Der Erfindung liegt daher die Aufgabe zugrunde, das serviceorientierte Sammeln von Daten und Handling der von einem Fahrzeug eines Fahrzeugschwarms erfassten Daten zu verbessern.

Diese Aufgabe wird durch ein Verfahren mit den Merkmalen des Anspruchs 1 und durch eine Vorrichtung mit den Merkmalen des Anspruchs 5 gelöst. Bevorzugte Ausführungsformen der Erfindung sind Gegenstand der Unteransprüche.

Durch entsprechende Sensoriken werden in jedem Fahrzeug während der Fahrt Daten erhoben, die beispielsweise für entsprechende Funktionen des Fahrzeugs notwendig sind oder die zur Information des Fahrers dienen.

Ausgangspunkt für das erste Verfahren ist der Fall, dass diese Daten nur erhoben, also gemessen werden, und direkt im Fahrzeug weiterverwendet werden. Eine direkte Speicherung erfolgt in diesem Fall nicht, dies wird erst durch den Backend-Rechner bewirkt. Im zweiten Fall des Verfahrens werden die gemessenen Daten gleichzeitig in einem geeigneten Speicher im Fahrzeug gespeichert. Der Backend-Rechner muss in diesem Fall die Speicherung bei einem Bedarf an diesen Daten nicht extra veranlassen, sondern die Daten für einen vorgegebenen Streckenabschnitt werden ihm aus dem Speicher des Fahrzeugs bei Bedarf zugeführt.

Auf diese Weise wird ein serviceorientiertes Anbieten, Sammeln und Übertragen von fahrzeugbasierten Daten der Sensorik eines Fahrzeugs eines Fahrzeugschwarms ermöglicht. Im Fahrzeug werden die als nützlich erkannten Daten erhoben und in definierten Speichern abgelegt. Diese fahrzeugbasierten Daten werden hierbei über einen definierten Zeitrahmen möglichen, diese Daten abnehmenden Funktionen im Backend-Rechner als "Service" angeboten, wobei das Angebot unabhängig von möglichen nutzenden Funktionen erfolgt. Diese nutzenden Funktionen des Backend-Rechner sind beispielsweise Anfragen externer Nutzer, die fahrzeugbasierte Daten für vorgegebene Streckenabschnitte benötigen, beispielsweise um aktuelle Verkehrsbedingungen auf den vorbestimmten Streckenabschnitten zu eruieren.

Vorzugsweise erfolgt das Übermitteln der gesammelten Daten auf Anforderung des Backend-Rechners, der somit das Timing des Abrufens der Daten verwaltet. Auf diese Weise wird das Fahrzeug bezüglich des Zeitpunkt der Übermittlung der angeforderten Daten nicht von selbst tätig.

Weiter bevorzugt meldet das Fahrzeug die Verfügbarkeit der angeforderten Daten an den Backend-Rechner, der daraufhin die Daten entweder anfordert oder das Angebot ignoriert. Das Timing der Verfügbarkeit der Daten ist daher fahrzeugseitig verortet.

Weiter bevorzugt werden die im Fahrzeug gesammelten Daten nach einer vorgegebenen Zeit gelöscht. Dies erfolgt sowohl hinsichtlich der ersten Variante als auch der zweiten Variante. Falls kein Bedarf an den ermittelten Daten trotz der anfänglichen Anforderung seitens des Backend-Rechners vorliegt, da sich beispielsweise die Auftragslage geändert hat oder von anderen Fahrzeugen des Schwarms genügend Daten geliefert wurden, werden die Daten nach einer gewissen Zeit gelöscht, insbesondere um beispielsweise Platz für neue Daten zu bekommen. Mit anderen Worten, nach einer gewissen Zeit, idealerweise nachdem auch der Wert der Daten zeitlich verfallen ist, werden die Daten gelöscht oder durch aktuellere Daten ersetzt.

Gemäß der beanspruchten Erfindung wird der durch die vorgegebene Zeit bestimmte Löschzeitpunkt der Daten vom Backend-Rechner dem Fahrzeug vorgegeben. Dies setzt entweder eine ausreichende Speicherkapazität voraus oder dem Backend-Rechner ist die Speicherkapazität bekannt, so dass er einen variablen Löschzeitpunkt vorgeben kann. Insbesondere kann der Backend-Rechner durch die Festlegung des Löschzeitpunkts seine eigene Auslastung flexibel gestalten.

Weiter bevorzugt übermittelt das Fahrzeug dem Backend-Rechner Informationen über die verfügbare Sensorik des Fahrzeugs beim Melden von verfügbaren fahrzeugbasierten Daten und der Backend-Rechner trifft aufgrund der verfügbaren Sensorik des Fahrzeugs eine Auswahl der fahrzeugbasierten Daten. Auf diese Weise kann der Backend-Rechner flexibel über die unterschiedlichen Sensoriken der Fahrzeuge eines Schwarms verfügen und Messaufträge planen und optimal verteilen.

Weiter bevorzugt übermittelt der Backend-Rechner dem Fahrzeug die gewünschte Messfrequenz und/oder die gewünschte Blocklänge der Daten. Unter der gewünschten Messfrequenz ist zu verstehen, in welchen Zeitabständen Messungen vorgenommen werden sollen, während die Blocklänge die Anzahl der im Block zu übermittelten Datensätze betrifft.

Vorzugsweise meldet das Fahrzeug sich bei Fahrtantritt mit seiner Fahrzeugidentifikation bei einer Fahrzeugverwaltung zur Kommunikation mit dem Backend-Rechner an, wobei die Fahrzeugverwaltung entweder eine separate Einheit oder einen Bestandteil des Backend-Rechners bildet.

Die erfindungsgemäße Vorrichtung zum Ermitteln, Anbieten und Übermitteln von fahrzeugbasierten Daten eines Streckenabschnitts, insbesondere Umfelddaten, die von einem den Streckenabschnitt befahrenden Fahrzeug eines Fahrzeugschwarms ermittelt und einem Backend-Rechner angeboten und bei Bedarf übermittelt werden, wobei die Vorrichtung zur Durchführung des im Vorangegangenen erläuterten Verfahrens eingerichtet und ausgelegt ist, umfasst
- eine Umfeldsensorik zum Erfassen fahrzeugbasierter Umfelddaten,
- einen Datenaggregator zum Speichern und Anordnen der von der Sensorik ermittelten Daten, und
- eine Steuereinrichtung zur Steuerung des Datenaggregators und zur Kommunikation des Fahrzeugs mit dem Backend-Rechner.

Weiter bevorzugt weist die Steuereinrichtung einen bidirektionalen Kanal zur Kommunikation mit einer Fahrzeugverwaltung und einen unidirektionalen Kanal zur Kommunikation mit einem Datenhandling des Backend-Rechners auf. Auf diese Weise kann sichergestellt werden, dass ein Auftraggeber die Identität des messenden Fahrzeugs nicht ermitteln kann, falls zwischen der Fahrzeugverwaltung und dem Datenaggregator des Backend-Rechners kein Austausch über die Fahrzeugidentität erfolgt.

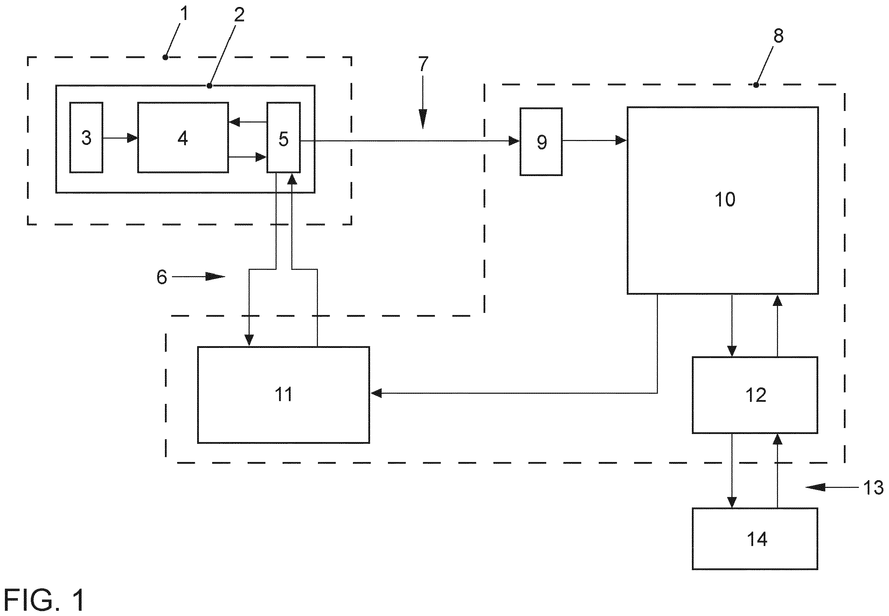

Eine bevorzugte Ausführungsform der Erfindung wird nachfolgend anhand der Zeichnung erläutert. Dabei zeigt
- Fig. 1: das serviceorientierte Ermitteln und Anbieten von Daten eines Fahrzeugs, welches Umfelddaten sammelt, an einen Backend-Rechner.

In Fig. 1 ist in schematischer Darstellung das Zusammenspiel zwischen einem Umfelddaten ermittelnden Fahrzeug 2 eines Fahrzeugschwarms 1 und einem Backendrechner 8 auf einen vorgegebenen Streckenabschnitt dargestellt.

Ein Fahrzeug 2 eines Fahrzeugschwarms 1 befährt einen aktuellen Streckenabschnitt und erzeugt mittels einer geeigneten Sensorik 3, wie beispielsweise Kameras, Lidar, Radar etc., Umfelddaten des betreffenden Streckenabschnitts, auf dem sich das Fahrzeug 2 gerade befindet. Die von der Sensorik 3 erzeugten Daten des aktuell befahrenen Streckenabschnitts werden einem Datenaggregator 4 zugeführt, welcher die Daten zu Datensätzen bezüglich des aktuell befahrenen Streckenabschnitts zusammenfasst und zwischenspeichert, wobei ein derartiger Datensatz neben beispielsweise GPS-Daten zur Lokalisierung des Datensatzes hinsichtlich des Streckenabschnitts, die Messzeit, die Fahrzeuggeschwindigkeit sowie eine Identifikation des messenden Fahrzeugs enthält. Ferner kann der Datenaggregator 4 die so erstellten Datensätze entsprechend der verwendeten Messmethode identifizieren, mit anderen Worten, den Datensätzen die Information über die den jeweiligen Datensatz erzeugende Sensorik beifügen, also die ermittelten Datensätze bezüglich der Sensorik zu klassifizieren.

Das Fahrzeug 1 weist ferner eine Steuereinrichtung 5 auf, welche neben der Aufgabe der Steuerung des Datenaggregators 4 die Kommunikation des Fahrzeugs 2 mit externen Einrichtungen per Funkstrecke zur Aufgabe hat. Insbesondere erfolgt über die Steuereinrichtung 5 eine Kommunikation mit einem externen Backend-Rechner 8, wobei zur Kommunikation mit dem Backend-Rechner 8 sich das Fahrzeug 2 vorzugsweise bei Fahrtbeginn über eine bidirektionalen Kommunikationskanal 6 bei einer Fahrzeugverwaltung 11 des Backend-Rechners 8, welche die bidirektionale Kommunikation des Fahrzeugs 2 mit dem Backend-Rechner 8 steuert, anmeldet. Die Fahrzeugverwaltung 11 des Backend-Rechners 8 kann daraufhin der Steuereinrichtung 5 des Fahrzeugs 2 eine Anmeldebestätigung und gegebenenfalls weitere Informationen oder Anweisungen des Backend-Rechners 8 senden.

Neben der Fahrzeugverwaltung 11 zur Kommunikation des Backend-Rechners 8 mit dem betrachteten Fahrzeug 2 des Fahrzeugschwarms 1 existiert eine weiterer unidirektionaler Übertragungskanal 7 zwischen der Steuereinrichtung 5 des Fahrzeugs 2 und dem Backend-Rechner 8 mittels einer Kommunikationseinrichtung 9 des Backend-Rechners 8, wobei über den unidirektionalen Kommunikationskanal 7 insbesondere die Übertragung von auf der Seite des Fahrzeugs 2 ermittelten Datensätzen an den Backend-Rechner 8 erfolgt. Ferner können über den unidirektionalen Kanal 7 Anfragen oder sonstige Informationen an den Backend-Rechner 8 übermittelt werden.

Die Trennung der Kommunikation des Fahrzeugs 2 mit dem Backend-Rechner 8 in die beiden Kanäle 6, 7 dient zur Anonymisierung der vom Fahrzeug 2 ermittelten Datensätze, da beispielsweise bei der Anmeldung des Fahrzeugs 2 die Fahrzeugverwaltung 11 die reale Identifikationsnummer des Fahrzeugs 2 erhält und dem Fahrzeug 2 zur Übertragung der gemessenen Datensätze an den Backend-Rechner 8 über den unidirektionalen Kanal 7 eine virtuelle Identifikationsnummer seitens der Fahrzeugverwaltung 11 zuteilt, so dass nur die Fahrzeugverwaltung 11 Kenntnis über die reale Identität des Fahrzeugs 2 besitzt und diese Kenntnis nicht an andere Instanzen des Backend-Rechners 8 weiterleitet. Insbesondere kann auch zur Erhöhung der Anonymität des Fahrzeugs 2 und der Datensätze die Fahrzeugverwaltung 11 vom Backend-Rechner 8 abgekoppelt sein und als eigenständige externe Einheit betrieben werden.

Die von der Steuereinrichtung 5 des Fahrzeugs 2 über den Datenkanal 7 übertragenen Datensätze werden von der Kommunikationseinrichtung 9 des Backend-Rechners 8 empfangen und dort gegebenenfalls auf ein Backend-Rechner 8 konformes Format transformiert, um beispielsweise einen optimalen Arbeitsablauf im Backend-Rechner 8 zu gewährleisten. Anschließend werden die Datensätze der Fahrzeugs 2 des Fahrzeugschwarms 1 der Datenverwaltung 10 des Backend-Rechners 8 zugeführt, wobei die Datenverwaltung 10 auch als Datenhandling bezeichnet wird.

Dabei verwaltet die Datenverwaltung 10 auch die Aufträge, die von einem externen Nutzer 14 bzw. Auftraggeber über einen bidirektionalen Kommunikationskanal 13 an eine Nutzerschnittstelle 12 des Backend-Rechners 8 gerichtet werden. So möchte beispielsweise ein Nutzer 14 für einen vorgegebenen Streckenabschnitt das Verkehrsaufkommen in einem stündlich wiederkehrenden Messzyklus wissen, wobei eine Mindestgröße eines Fahrzeugschwarms 1 notwendig ist, um die Fahrzeugdichte des Streckenabschnitts anhand von Abstandsmessungen des datenliefernden Fahrzeugs 2 zu den Fahrzeugen in der seiner Umgebung sowie deren Relativgeschwindigkeiten und die Eigengeschwindigkeit des Fahrzeugs 2 bestimmen zu können. Das datenerzeugende Fahrzeug 2 des Schwarms 1 liefert daher Datensätze mit Abständen zu anderen Fahrzeugen, Relativgeschwindigkeiten und Eigengeschwindigkeit als Funktion der Position und der Zeit, aus denen die Datenverwaltung 10, die auch als Datenhandling bezeichnet werden kann, das Verkehrsaufkommen bestimmt und über die Kommunikationsschnittstelle 12 an den Auftraggeber 14 übermittelt. Ein anderer Auftrag kann beispielsweise den Straßenzustand vorgegebener Abschnitte betreffen, um zu ergründen, ob die Fahrbahn trocken, nass, verschneit oder vereist ist. Offensichtlich können daher verschiedenen Aufträge unterschiedliche Begebenheiten für vorgegebene Streckenabschnitte betreffen, so dass Informationen unterschiedlicher Sensoriken der Fahrzeuge 2 des Fahrzeugschwarms 1 angefragt werden können.

Mit anderen Worten, in den Fahrzeugen 2 des Schwarms 1 werden alle als möglicherweise nützlich erkannten Daten von deren Umfeldsensoriken 3 erhoben und in definierten Speichern des Datenaggregators 4 abgelegt. Diese Daten werden hierbei über einen definierten Zeitrahmen möglichen abnehmenden Funktionen im Backend-Rechner 8 als "Service" angeboten. Dieses Angebot erfolgt unabhängig von möglichen nutzenden Funktionen. Nach einer gewissen Zeit, idealerweise nachdem auch der Wert der Daten zeitlich verfallen ist, werden die Daten im Datenaggregator 4 gelöscht oder durch aktuellere Daten ersetzt.

Der Ablauf des "serviceorientierten Anbietens " von Daten seitens eines Fahrzeugs 2 nach seiner Anmeldung über die Fahrzeugverwaltung 11 beim Backend-Rechner 8 sieht daher folgendermaßen aus:
- Das Fahrzeug 2 meldet verfügbare Sensordaten für einen aktuellen Streckenabschnitt und damit die Art der Sensorik an das Datenhandling 10 des Backend-Rechners 8, welcher der Steuereinrichtung 5 des Fahrzeugs 2 seine Anforderungen oder Datenwünsche über die Fahrzeugverwaltung 11 mitteilt, also eine Auswahl der im Fahrzeug 2 vorhandenen Signale, eine Auswahl der Messfrequenz und gegebenenfalls eine Auswahl der Blocklänge, d.h. wie viele unterschiedliche Datensätze zu einem Block zusammengefasst werden sollen, der dann übertragen werden soll,
- das Fahrzeug 2 sammelt als Reaktion auf die Anforderungen des Backenend-Rechners 8 Daten gemäß dem Auftrag und legt diese in dem Datenaggregator 4 ab,
- der Versand der gesammelten Daten über den Übertragungskanal 7 an das Datenhandling 10 des Backend-Rechners 8 erfolgt auf Anforderung des Backend-Rechners 8, oder das Fahrzeug 2 meldet an den Backend-Rechner 8, dass Daten gemäß Auftrag vorhanden sind und der Backend-Rechner 8 fordert dann die Daten an, und
- die Löschzeit der im Datenaggregator 4 gesammelten Daten wird durch eine vom Backend-Rechner 8 vorgegebene Löschzeit definiert, so dass auf diese Weise nicht angeforderte Daten im Fahrzeug 2 verfallen.

### Bezugszeichenliste

- 1: Fahrzeugschwarm
- 2: Fahrzeug
- 3: Umfeldsensorik des Fahrzeugs
- 4: Datenaggregator des Fahrzeugs
- 5: Steuereinrichtung / Kommunikationseinrichtung
- 6: Kommunikationskanal
- 7: Übertragungskanal
- 8: Backend-Rechner
- 9: Kommunikationseinrichtung
- 10: Datenhandling / Auftragsverwaltung
- 11: Fahrzeugverwaltung
- 12: Schnittstelle zwischen Backend-Rechner und Auftraggeber
- 13: Kommunikationskanal
- 14: Auftraggeber / Nutzer

## Patentansprüche

1. Verfahren zum Ermitteln, Anbieten und Übermitteln von fahrzeugbasierten Daten eines Streckenabschnitts, insbesondere Umfelddaten, die von einem den Streckenabschnitt befahrenden Fahrzeug (2) eines Fahrzeugschwarms (1) ermittelt und einem Backend-Rechner (8) angeboten und bei Bedarf übermittelt werden, mit den Schritten:
- Melden von verfügbaren fahrzeugbasierten Daten bezüglich des aktuell befahrenen Streckenabschnitts an den Backend-Rechner (8),
- Empfangen einer Anforderung von zumindest einer Auswahl der angebotenen fahrzeugbasierten Daten für den vorgegebenen Streckenabschnitt von dem Backend-Rechner (8),
- Sammeln der angeforderten Auswahl der fahrzeugbasierten Daten in einem Speicher (4) des Fahrzeugs (2),
- Melden der Verfügbarkeit der gesammelten Daten an den Backend-Rechner (8), und
- Übermitteln der gesammelten Daten an den Backend-Rechner (8) auf Anforderung des Backend-Rechners, falls ein Bedarf an den gesammelten Daten vorliegt, **dadurch gekennzeichnet, dass** das Verfahren weiter umfasst: Löschen der gesammelten Daten zu einem Löschzeitpunkt, der vom Backend-Rechner (8) dem Fahrzeug vorgegeben wird, falls trotz der anfänglichen Anforderung seitens des Backend-Rechners kein Bedarf an den gesammelten Daten vorliegt.

2. Verfahren nach Anspruch 1, **dadurch gekennzeichnet, dass** das Fahrzeug (2) dem Backend-Rechner Informationen über die verfügbare Sensorik (3) des Fahrzeugs (2) beim Melden von verfügbaren fahrzeugbasierten Daten übermittelt und der Backend-Rechner aufgrund der verfügbaren Sensorik (3) eine Auswahl der fahrzeugbasierten Daten trifft.

3. Verfahren nach Anspruch 1 oder 2, **dadurch gekennzeichnet, dass** der Backend-Rechner (8) dem Fahrzeug die gewünschte Messfrequenz und/oder die gewünschte Blocklänge der Daten übermittelt.

4. Verfahren nach einem der vorangegangenen Ansprüche, **dadurch gekennzeichnet, dass** das Fahrzeug (2) sich bei Fahrtantritt mit seiner Fahrzeugidentifikation bei einer Fahrzeugverwaltung (11) zur Kommunikation mit dem Backend-Rechner (8) anmeldet, wobei die Fahrzeugverwaltung entweder eine separate Einheit oder einen Bestandteil des Backend-Rechners (8) bildet.

5. Vorrichtung zum Ermitteln, Anbieten und Übermitteln von fahrzeugbasierten Daten eines Streckenabschnitts, insbesondere Umfelddaten, die von einem den Streckenabschnitt befahrenden Fahrzeug (2) eines Fahrzeugschwarms (1) ermittelt und einem Backend-Rechner (8) angeboten und bei Bedarf übermittelt werden, mit einer Umfeldsensorik (3) zum Erfassen fahrzeugbasierter Umfelddaten, einem Datenaggregator (4) zum Speichern der von der Sensorik ermittelten Daten, und einer Steuereinrichtung (5) zur Steuerung des Datenaggregators (4) und zur Kommunikation des Fahrzeugs (2) mit dem Backend-Rechner (8), wobei die Steuereinrichtung ausgelegt ist
- verfügbare fahrzeugbasierte Daten bezüglich des aktuell befahrenen Streckenabschnitts an den Backend-Rechner (8) zu melden,
- eine Anforderung von zumindest einer Auswahl der angebotenen fahrzeugbasierten Daten für den vorgegebenen Streckenabschnitt von dem Backend-Rechner (8) zu empfangen,
- die angeforderte Auswahl der fahrzeugbasierten Daten in einem Speicher (4) des Fahrzeugs (2) zu sammeln,
- die Verfügbarkeit der gesammelten Daten an den Backend-Rechner (8) zu melden, und
- die gesammelten Daten an den Backend-Rechner (8) auf Anforderung des Backend-Rechners zu übermitteln, falls ein Bedarf an den gesammelten Daten vorliegt, **dadurch gekennzeichnet, dass** die Vorrichtung weiter ausgelegt ist, die gesammelten Daten zu einem Löschzeitpunkt, der vom Backend-Rechner (8) dem Fahrzeug vorgegeben wird, zu löschen, falls trotz der anfänglichen Anforderung seitens des Backend-Rechners kein Bedarf an den gesammelten Daten vorliegt.

6. Vorrichtung nach Anspruch 5, **dadurch gekennzeichnet, dass** die Steuereinrichtung (5) einen bidirektionalen Kanal (6) zur Kommunikation mit einer Fahrzeugverwaltung (11) und einen unidirektionalen Kanal (7) zur Kommunikation mit einem Datenhandling (10) des Backend-Rechners (8) aufweist.

## Claims

1. A method for acquiring, offering, and transmitting vehicle-based data of a route section, in particular environment data acquired by a vehicle (2) of a vehicle swarm (1) traveling on the route section and offered to a back-end computer (8) and transmitted if required, comprising the steps:
- reporting available vehicle-based data relating to the route section currently being traveled on to the back-end computer (8),
- receiving a request for at least one selection of the vehicle-based data offered relating to the predefined route section from the back-end computer (8),
- collecting the requested selection of the vehicle-based data in a memory (4) of the vehicle (2),
- reporting the availability of the collected data to the back-end computer (8), and
- transmitting the collected data to the back-end computer (8) at the request of the back-end computer if the collected data are required,
**characterized in that** the method further comprises:
deleting the collected data at a point in time determined by the back-end computer (8) for the vehicle, if despite the initial request from the back-end computer the collected data are not required.

2. The method of claim 1, **characterized in that** the vehicle (2) transmits information about the available sensors (3) of the vehicle (2) to the back-end computer when reporting available vehicle-based data and the back-end computer makes a selection of the vehicle-based data based on the available sensors (3).

3. The method of claim 1 or 2, **characterized in that** the back-end computer (8) transmits the desired measuring frequency and/or the desired block length of the data to the vehicle.

4. The method of one of the preceding claims, **characterized in that** the vehicle (2) logs in to a vehicle management system (11) for communication with the back-end computer (8) upon departure using its vehicle identification, wherein the vehicle management system either forms a separate unit or a component of the back-end computer (8).

5. A device for acquiring, offering, and transmitting vehicle-based data of a route section, in particular environment data acquired by a vehicle (2) of a vehicle swarm (1) traveling on the route section and offered to a back-end computer (8) and transmitted if required, with environment sensors (3) for recording vehicle-based environment data, a data aggregator (4) for storing the data acquired by the sensors, and a control circuit (5) for controlling the data aggregator (4) and for communication of the vehicle (2) with the back-end computer (8), wherein the control circuit is designed to
- report available vehicle-based data relating to the route section currently being traveled on to the back-end computer (8),
- receive a request for at least one selection of the vehicle-based data offered relating to the predefined route section from the back-end computer (8),
- collect the requested selection of the vehicle-based data in a memory (4) of the vehicle (2),
- report the availability of the collected data to the back-end computer (8), and
- transmit the collected data to the back-end computer (8) at the request of the back-end computer if the collected data are required,
**characterized in that** the device is further designed to
delete the collected data at a point in time determined by the back-end computer (8) for the vehicle, if despite the initial request from the back-end computer the collected data are not required.

6. The device of claim 5, **characterized in that** the control circuit (5) comprises a bidirectional channel (6) for communication with a vehicle management system (11) and a unidirectional channel (7) for communication with a data-handling system (10) of the back-end computer.

## Revendications

1. Procédé permettant de déterminer, proposer et transmettre des données d'un tronçon de route, basées sur un véhicule, notamment des données d'environnement, qui sont déterminées par un véhicule (2) d'un groupe de véhicules (1), circulant sur le tronçon de route, et qui sont proposées et, le cas échéant, transmises à un ordinateur backend (8), comprenant les étapes suivantes :
- communication de données basées sur le véhicule disponibles concernant le tronçon de route actuellement parcouru à l'ordinateur backend (8),
- réception d'une demande d'au moins une sélection de données basées sur le véhicule proposées pour le tronçon de route prédéterminé depuis l'ordinateur backend (8),
- collecte de la sélection de données basées sur le véhicule demandée dans une mémoire (4) du véhicule (2),
- communication de la disponibilité des données collectées à l'ordinateur backend (8), et
- transmission des données collectées à l'ordinateur backend (8) à la demande de l'ordinateur backend s'il existe un besoin pour les données collectées, **caractérisé en ce que** le procédé comprend en outre : l'effacement des données collectées à un moment d'effacement donné au véhicule par l'ordinateur backend (8) si, malgré la demande initiale de l'ordinateur backend, il n'y a pas de besoin pour les données collectées.

2. Procédé selon la revendication 1, **caractérisé en ce que** le véhicule (2) transmet à l'ordinateur backend des informations sur les capteurs (3) disponibles du véhicule (2) lors de la communication de données basées sur le véhicule disponibles et **en ce que** l'ordinateur backend effectue une sélection de données basées sur le véhicule sur la base des capteurs (3) disponibles.

3. Procédé selon la revendication 1 ou 2, **caractérisé en ce que** l'ordinateur backend (8) transmet au véhicule la fréquence de mesure souhaitée et/ou la longueur de bloc des données souhaitée.

4. Procédé selon l'une des revendications précédentes, **caractérisé en ce que** le véhicule (2) s'enregistre avec son identification de véhicule auprès d'un système de gestion de véhicule (11) lors du début du trajet pour la communication avec l'ordinateur backend (8), le système de gestion de véhicule formant une unité séparée ou faisant partie intégrante de l'ordinateur backend (8).

5. Dispositif permettant de déterminer, proposer et transmettre des données d'un tronçon de route, basées sur un véhicule, notamment des données d'environnement, qui sont déterminées par un véhicule (2) d'un groupe de véhicules (1), circulant sur le tronçon de route, et qui sont proposées et, le cas échéant, transmises à un ordinateur backend (8), avec un système de capteurs d'environnement (3) pour la saisie de données d'environnement basées sur le véhicule, un agrégateur de données (4) pour la mémorisation des données déterminées par le système de capteurs, et un dispositif de commande (5) pour la commande de l'agrégateur de données (4) et pour la communication du véhicule (2) avec l'ordinateur backend (8), le dispositif de commande étant conçu pour
- communiquer à l'ordinateur backend (8) des données basées sur le véhicule disponibles concernant le tronçon de route actuellement parcouru,
- recevoir de l'ordinateur backend (8) une demande d'au moins une sélection de données basées sur le véhicule proposées pour le tronçon de route prédéterminé,
- collecter la sélection de données basées sur le véhicule demandée dans une mémoire (4) du véhicule (2),
- communiquer la disponibilité des données collectées à l'ordinateur backend (8), et
- transmettre les données collectées à l'ordinateur backend (8) à la demande de l'ordinateur backend s'il existe un besoin pour les données collectées, **caractérisé en ce que** le dispositif est en outre conçu pour effacer les données collectées à un moment d'effacement donné au véhicule par l'ordinateur backend (8) si, malgré la demande initiale de l'ordinateur backend, il n'y a pas de besoin pour les données collectées.

6. Dispositif selon la revendication 5, **caractérisé en ce que** le dispositif de commande (5) présente un canal bidirectionnel (6) pour la communication avec un système de gestion de véhicule (11) et un canal unidirectionnel (7) pour la communication avec un système de gestion de données (10) de l'ordinateur backend (8).
